(19) Europäisches Patentamt / European Patent Office / Office européen des brevets

(11) EP 4 615 116 A1

(12) **EUROPEAN PATENT APPLICATION**
published in accordance with Art. 153(4) EPC

(43) Date of publication:
**10.09.2025 Bulletin 2025/37**

(21) Application number: **22967947.7**

(22) Date of filing: **09.12.2022**

(51) International Patent Classification (IPC):
$H04W\ 72/21$ (2023.01)    $H04W\ 24/08$ (2009.01)
$G06N\ 20/00$ (2019.01)    $H04L\ 5/00$ (2006.01)
$H04W\ 74/08$ (2024.01)    $H04W\ 74/00$ (2009.01)
$H04W\ 72/23$ (2023.01)    $H04B\ 17/309$ (2015.01)

(52) Cooperative Patent Classification (CPC):
G06N 20/00; H04B 17/309; H04L 5/00;
H04W 24/08; H04W 72/21; H04W 72/23;
H04W 74/00; H04W 74/08

(86) International application number:
**PCT/KR2022/020007**

(87) International publication number:
**WO 2024/122689 (13.06.2024 Gazette 2024/24)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Samsung Electronics Co., Ltd.**
**Suwon-si, Gyeonggi-do 16677 (KR)**

(72) Inventors:
• **LEE, Changsung**
  **Suwon-si Gyeonggi-do 16677 (KR)**

• **KIM, Suhwook**
  **Suwon-si Gyeonggi-do 16677 (KR)**
• **SONG, Sooeun**
  **Suwon-si Gyeonggi-do 16677 (KR)**
• **YI, Jaehong**
  **Suwon-si Gyeonggi-do 16677 (KR)**
• **JANG, Hyeondeok**
  **Suwon-si Gyeonggi-do 16677 (KR)**

(74) Representative: **Gulde & Partner**
**Patent- und Rechtsanwaltskanzlei mbB**
**Berliner Freiheit 2**
**10785 Berlin (DE)**

(54) **METHOD AND DEVICE FOR SUPPORTING MULTI-UPLINK CARRIER ACCESS IN WIRELESS COMMUNICATION SYSTEM**

(57) The present disclosure relates to a 5G or 6G communication system for supporting a higher data transmission rate beyond a 4G communication system such as LTE. A method of a terminal in a wireless communication system of the present disclosure may comprise the steps of: receiving, from a base station, AI model configuration information for AI-based UL path loss estimation; and performing the AI-based UL path loss estimation for a base UL carrier on the basis of the AI model configuration information.

FIG. 3

EP 4 615 116 A1

**Description**

[Technical Field]

The disclosure relates to a method and device for supporting multiple uplink carrier access and uplink transmission power control in a wireless communication system.

[Background Art]

Wireless communication technologies have been developed mainly for human services, such as voice, multimedia, and data communication. As 5th-generation (5G) communication systems are commercially available, connected devices are expected to explosively increase and to be connected to a communication network. Examples of things connected to a network may include vehicles, robots, drones, home appliances, displays, smart sensors installed in various infrastructures, construction machinery, and factory equipment. Mobile devices will evolve into various form factors, such as augmented reality glasses, virtual reality headsets, and hologram devices. In the 6th-generation (6G) era, efforts are being made to develop an enhanced 6G communication system to provide various services by connecting hundreds of billions of devices and things. For this reason, the 6G communication system is called a beyond 5G system.

In the 6G communication system expected to be realized around year 2030, the maximum transmission rate is tera (i.e., 1000 gigabit) bps, and the wireless latency is 100 microseconds ($\mu$sec). In other words, the transmission rate of the 6G communication system is 50 times faster than that of the 5G communication system, and the wireless latency is reduced to one tenth.

To achieve these high data rates and ultra low latency, 6G communication systems are considered to be implemented in terahertz bands (e.g., 95 gigahertz (95 GHz) to 3 terahertz (3 THz) bands). As the path loss and atmospheric absorption issues worsen in the terahertz band as compared with millimeter wave (mmWave) introduced in 5G, technology that may guarantee signal reach, that is, coverage, would become more important. As major techniques for ensuring coverage, there need to be developed multi-antenna transmission techniques, such as new waveform, beamforming, massive multiple-input and multiple-output (MIMO), full dimensional MIMO (FD-MIMO), array antennas, or large-scale antennas, which exhibit better coverage characteristics than radio frequency (RF) devices and orthogonal frequency division multiplexing (OFDM). New technologies, such as a metamaterial-based lens and antennas, high-dimensional spatial multiplexing technology using an orbital angular momentum (OAM), and a reconfigurable intelligent surface (RIS), are being discussed to enhance the coverage of the terahertz band signals.

For 6G communication systems to enhance frequency efficiency and system network for 6G communication systems include full-duplex technology, there are being developed full-duplex technology in which uplink and downlink simultaneously utilize the same frequency resource at the same time, network technology that comprehensively use satellite and high-altitude platform stations (HAPSs), network architecture innovation technology that enables optimization and automation of network operation and supports mobile base stations, dynamic spectrum sharing technology through collision avoidance based on prediction of spectrum usages, artificial intelligence (AI)-based communication technology that uses AI from the stage of designing and internalizes end-to-end AI supporting function to thereby optimize the system, and next-generation distributed computing technology that realizes services that exceed the limitation of the UE computation capability by ultra-high performance communication and mobile edge computing (MEC) or clouds. Further, continuous attempts have been made to reinforce connectivity between device, further optimizing the network, prompting implementation of network entities in software, and increase the openness of wireless communication by the design of a new protocol to be used in 6G communication systems, implementation of a hardware-based security environment, development of a mechanism for safely using data, and development of technology for maintaining privacy.

Such research and development efforts for 6G communication systems would implement the next hyper-connected experience via hyper-connectivity of 6G communication systems which encompass human-thing connections as well as thing-to-thing connections. Specifically, the 6G communication system would be able to provide services, such as truly immersive extended reality (XR), high-fidelity mobile hologram, and digital replica. Further, services, such as remote surgery, industrial automation and emergency response would be provided through the 6G communication system thanks to enhanced security and reliability and would have various applications in medical, auto, or home appliance industries.

[Detailed Description of the Invention]

[Technical Problem]

The disclosure provides a method and device for supporting AI-based multiple uplink carrier access and uplink transmission power control in a wireless communication system.

[Technical Solution]

According to an embodiment of the disclosure, a method by a UE in a wireless communication system may comprise receiving, from a base station, AI model setup information for estimating AI-based UL pathloss and estimating the AI-based UL pathloss for a base UL carrier based on the AI model setup information.

According to an embodiment of the disclosure, a UE in a wireless communication system may comprise a memory and a processor connected to the memory. The processor may be configured to receive, from a base station, artificial intelligence AI model setup information for estimating AI-based UL pathloss and estimate the AI-based UL pathloss for a base UL carrier based on the AI model setup information.

[Brief Description of Drawings]

FIG. 1 illustrates an example method for uplink (UL) enhancement according to an embodiment of the disclosure;
FIG. 2 illustrates an example scenario for determining UL coverage and UL power using downlink (DL) measurement according to an embodiment of the disclosure;
FIG. 3 illustrates a method for multiple UL carrier access according to an embodiment of the disclosure;
FIG. 4 illustrates an example scenario for AI-based UL inference according to an embodiment of the disclosure;
FIG. 5 illustrates a procedure for performing AI-based UL inference by a UE according to an embodiment of the disclosure;
FIG. 6 illustrates an example of an AI model for AI-based UL inference according to an embodiment of the disclosure;
FIG. 7 illustrates an example scenario for UL carrier addition according to an embodiment of the disclosure;
FIG. 8 illustrates an example of a procedure for UL carrier addition according to an embodiment of the disclosure;
FIG. 9 illustrates another example of a procedure for UL carrier addition according to an embodiment of the disclosure;
FIG. 10 illustrates an example scenario for UL carrier release according to an embodiment of the disclosure;
FIG. 11 illustrates an example of a procedure for UL carrier release according to an embodiment of the disclosure;
FIG. 12 illustrates an example of a data collection procedure for training an AI model according to an embodiment of the disclosure;
FIG. 13 illustrates an example of a data collection procedure for training an AI model according to an embodiment of the disclosure;
FIG. 14 is a flowchart illustrating a method by a UE according to an embodiment of the disclosure;
FIG. 15 is a view illustrating an example of a configuration of a UE in a wireless communication system according to an embodiment of the disclosure; and
FIG. 16 is a view illustrating an example of a configuration of a base station in a wireless communication system according to an embodiment of the disclosure.

[Mode for Carrying out the Invention]

In describing embodiments, the description of technologies that are known in the art and are not directly related to the present invention is omitted. This is for further clarifying the gist of the present disclosure without making it unclear.

For the same reasons, some elements may be exaggerated or schematically shown. The size of each element does not necessarily reflects the real size of the element. The same reference numeral is used to refer to the same element throughout the drawings.

Advantages and features of the present disclosure, and methods for achieving the same may be understood through the embodiments to be described below taken in conjunction with the accompanying drawings. However, the present invention is not limited to the embodiments disclosed herein, and various changes may be made thereto. The embodiments disclosed herein are provided only to inform one of ordinary skilled in the art of the category of the present disclosure. The present invention is defined only by the appended claims. The same reference numeral denotes the same element throughout the specification. When determined to make the subject matter of the present invention unclear, the detailed description of the known art or functions may be skipped. The terms as used herein are defined considering the functions in the present disclosure and may be replaced with other terms according to the intention or practice of the user or operator. Therefore, the terms should be defined based on the overall disclosure.

It should be appreciated that the blocks in each flowchart and combinations of the flowcharts may be performed by computer program instructions. Since the computer program instructions may be equipped in a processor of a general-use computer, a special-use computer or other programmable data processing devices, the instructions executed through a processor of a computer or other programmable data processing devices generate means for performing the functions described in connection with a block(s) of each flowchart. Since the computer program instructions may be stored in a computer-available or computer-readable memory that may be oriented to a computer or other programmable data processing devices to implement a function in a specified manner, the instructions stored in the computer-available or computer-readable memory may produce a product including an instruction means for performing the functions described in connection with a block(s) in each flowchart. Since the computer program instructions may be equipped in a computer or other programmable data processing devices, instructions that generate a process executed by a computer as a series of operational steps are performed over the computer or other programmable data processing devices and operate the computer or other programmable data processing devices may provide steps for executing the functions described in connection with a block(s) in each flowchart.

Further, each block may represent a module, segment, or part of a code including one or more executable instructions for executing a specified logical function(s). Further, it should also be noted that in some replacement execution examples, the functions mentioned in the blocks may occur in different orders. For example, two blocks that are consecutively shown may be performed substantially simultaneously or in a reverse order depending on corresponding functions.

As used herein, the term "unit" means a software element or a hardware element such as a field-programmable gate array (FPGA) or an application specific integrated circuit (ASIC). A unit plays a certain role. However, the term "unit" is not limited as meaning a software or hardware element. A 'unit' may be configured in a storage medium that may be addressed or may be configured to reproduce one or more processors. Accordingly, as an example, a 'unit' includes elements, such as software elements, object-oriented software elements, class elements, and task elements, processes, functions, attributes, procedures, subroutines, segments of program codes, drivers, firmware, microcodes, circuits, data, databases, data architectures, tables, arrays, and variables. A function provided in an element or a 'unit' may be combined with additional elements or may be split into sub elements or sub units. Further, an element or a 'unit' may be implemented to reproduce one or more CPUs in a device or a security multimedia card. According to embodiments, a "...unit" may include one or more processors.

As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order).

Wireless communication systems evolve beyond voice-centered services to broadband wireless communication systems to provide high data rate and high-quality packet data services, such as 3rd generation partnership project (3GPP) high speed packet access (HSPA), long term evolution (LTE) or evolved universal terrestrial radio access (E-UTRA)), LTE-advanced (LTE-A), LTE-pro, 3GPP2 high rate packet data (HRPD), ultra-mobile broadband (UMB), and institute of electrical and electronics engineers (IEEE) 802.16e communication standards.

As a representative example of such broadband wireless communication system, the LTE system adopts orthogonal frequency division multiplexing (OFDM) for downlink and single carrier frequency division multiple access (SC-FDMA) for uplink. Uplink means a wireless link where the user equipment (UE) (or mobile station (MS) transmits data or control signals to the base station (BS, or eNode B), and download means a wireless link where the base station transmits data or control signals to the UE. Such multiple access scheme may typically allocate and operate time-frequency resources carrying data or control information per user not to overlap, i.e., to maintain orthogonality, to thereby differentiate each user's data or control information.

Hereinafter, the base station (BS) may be an entity allocating resource to terminal and may be at least one of gNode B, gNB, eNode B, eNB, Node B, radio access unit, base station controller, or node over network. The base station may be a network entity including at least one of an integrated access and backhaul-donor (IAB-donor), which is a gNB providing network access to UE(s) through a network of backhaul and access links in the NR system, and an IAB-node, which is a radio access network (RAN) node supporting NR backhaul links to the IAB-donor or another IAB-node and supporting NR access link(s) to UE(s). The user equipment (UE) may be at least one of a terminal, a mobile station (MS), cellular phone, smartphone, computer, or multimedia system capable of performing communication functions. The UE is wirelessly connected through the IAB-node and may transmit/receive data to and from the IAB-donor connected with at least one IAB-node through the backhaul link.

For ease of description, some of the terms or names defined in the 3rd generation partnership project (3GPP) standards (standards for 5G, new radio (NR), long-term evolution (LTE), or similar systems) may be used. However, the disclosure is not limited by such terms and names and may be likewise applicable to systems conforming to other standards. Further, the disclosure is not limited to the terms used in the following embodiments, and the terms may be replaced with other terms denoting objects with equivalent technical meanings.

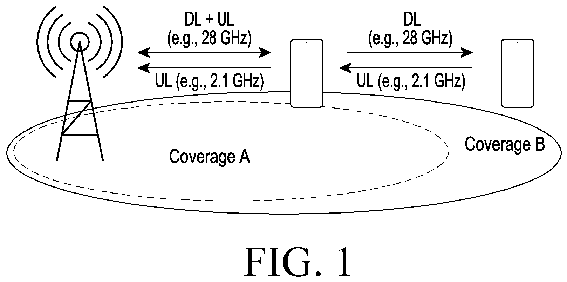

FIG. 1 illustrates an example method for uplink (UL) enhancement according to an embodiment of the disclosure.

In general, the uplink (UL) has narrower coverage than the downlink (DL) due to power limitations of the UE. This may act as a bottleneck in overall system coverage. In particular, in the case of the 'above 6 GHz' band (e.g., mmWave band/high band (e.g., 24-92 GHz)/upper-mid band (e.g., 7-24 GHz)), the coverage mismatch between these DL/UL may worsen.

To address the coverage mismatch, supplementary UL (SUL) technology may be used to secure UL coverage by additionally using a lower frequency band in UL than in DL.

For enhancement of UL capacity, a UL transmission (Tx) switching technology may be used together with the SUL technology. For example, as shown in FIG. 1, UL Tx switching for SUL may be applied. Referring to FIG. 1, not only the high band (e.g., 28 GHz band), but also the low/mid band (e.g., 2.1 GHz band) for SUL may be switched and used for UL transmission within coverage A. Meanwhile, as shown in FIG. 1, UL Tx switching may be applied between two bands, but is not limited thereto. For example, UL Tx switching is applicable even between up to 3 or 4 bands.

As such, a technique for UL enhancement, such as SUL/UL Tx switching may use a plurality of UL carriers for UL transmission. Therefore, it is necessary to consider a method for selecting and accessing an appropriate UL carrier among a plurality of UL carriers. Further, a method for determining suitable UL power for UL transmission through the selected UL carrier needs to be considered.

Meanwhile, an example of a scheme for UL carrier selection and UL transmission power determination may be a scheme based on measurement of a DL signal (DL measurement).

For example, UL coverage or UL carrier-based selection may be determined based on comparison between DL reference signal received power (RSRP) measurement data and a preset threshold (e.g., rsrp-ThresholdSSB-SUL). As an embodiment, the DL RSRP measurement data may be data (DL synchronization signal (SS)-RSRP measurement data) measured based on the DL synchronization signal block (SSB) (or reference signal in the SSB), or data measured based on another reference signal (e.g., channel state information reference signal (CSI-RS)).

For example, UL transmit power may be determined using the pathloss estimated based on the DL SSB or another reference signal (e.g., CSI-RS). Such pathloss estimation may use a known pathloss estimation method.

Equation 1 below represents an example of a method for calculating physical random access channel (PRACH) transmission power based on pathloss.

[Equation 1]

$$P_{PRACH,b,f,c}(i) = \min\{P_{CMAX,f,c}(i), P_{PRACH,target,f,c} + PL_{b,f,c}\}$$

[dBm],

Here, $P_{PRACH,b,f,c}(i)$ denotes the transmission power of the PRACH transmitted on the active UL bandwidth part (BWP) $b$ of the carrier $f$ of the serving cell $c$ in the transmission occasion $i$. $P_{CMAX,f,c}(i)$ denotes the UE configured maximum output power for the carrier $f$ of the serving cell $c$ in the transmission occasion $i$. $P_{PRACH,target,f,c}$ denotes the PRACH target reception power (PREAMBLE_RECEIVED_TARGET_POWER) provided by higher layers for the active UL BWP $b$ of the carrier $f$ of the serving cell $c$. $PL_{b,f,c}$ denotes the pathloss estimation for the active UL BWP $b$ of the carrier $f$ based on the DL RS associated with PRACH transmission for the active UL BWP $b$ of the serving cell $c$.

Equation 2 below represents an example of a method for calculating physical uplink shared channel (PUSCH) transmission power based on pathloss.

|[Equation 2]

$$P_{PUSCH,b,f,c}(i,j,q_d,l) = \min\left\{ \begin{array}{l} P_{CMAX,f,c}(i), \\ P_{O\text{-}PUSCH,b,f,c}(j) + 10\log_{10}(2^{\mu} \cdot M_{RB,b,f,c}^{PUSCH}(i)) + \alpha_{b,f,c}(j) \cdot PL_{b,f,c}(q_d) + \triangle_{TF,b,f,c}(i) + f_{b,f,c}(i,l) \end{array} \right\}$$

[dBm],

Here, $P_{PUSCH,b,f,c}(i,j,q_d,l)$ denotes the transmission power in the PUSCH transmission occasion $i$ of the PUSCH, transmitted on the active UL BWP $b$ of the carrier $f$ of the serving cell $c$ using the parameter set configuration having index $j$ and the PUSCH power control adjustment state having index $l$. $P_{CMAX,f,c}(i)$ denotes the UE-configured maximum output power for the carrier $f$ of the serving cell $c$ in the PUSCH transmission occasion $i$. $P_{O\text{-}PUSCH,b,f,c}(j)$ denotes the parameter constituted of the sum of component $P_{O\text{-}NOMLVAL,PUSCH,f,c}(j)$ and component $P_{O\text{-}UE\text{-}PUSCH,bf,c(j)}$. $M_{RB,b,f,c}^{PUSCH}(i)$ denotes the bandwidth of the PUSCH resource allocation represented as the number of resource blocks for the PUSCH transmission occasion $i$. on the active UL BWP $b$ of the carrier $f$. of the serving cell $c$. $PL_{b,f,c}(q_d)$ denotes the DL pathloss estimation in dB calculated by the UE using the reference signal index $q_d$ for the active UL BWP $b$ of the carrier $f$ of the serving cell $c$. $f_{b,f,c}(i,l)$ denotes the PUSCH power control adjustment state $l$ for the active UL BWP $b$ of the carrier $f$ of the serving cell *c* and the PUSCH transmission occasion *i*.

However, when the DL band and the UL band are different, the accuracy of pathloss estimation and the accuracy of UL carrier selection (or UL coverage) may deteriorate. Therefore, it is necessary to consider a method for increasing the accuracy of pathloss estimation and UL carrier selection.

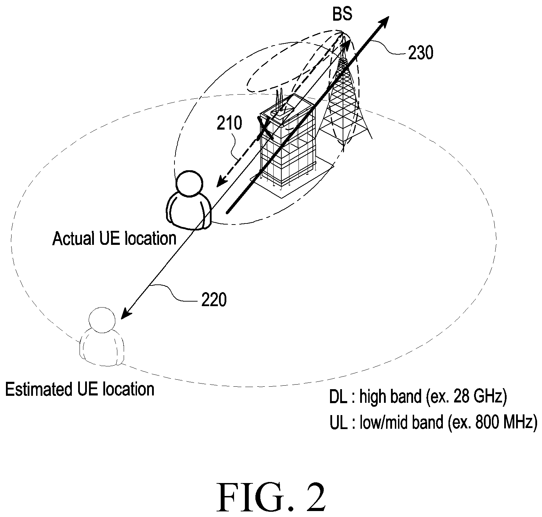

FIG. 2 illustrates an example scenario for determining UL coverage and UL power using downlink (DL) measurement according to an embodiment of the disclosure.

In the example of FIG. 2, it is assumed that the DL band and the UL band are different and that the UL band uses a lower frequency band than the DL band. For example, as shown in FIG. 2, the UL band may use a low/mid band (e.g., 800 MHz), and the DL band may use a high band (e.g., 28 GHz).

Referring to FIG. 2, the UE may perform DL measurement.

The UE may measure DL RSRP (e.g., DL SS-RSRP). In this case, e.g., as shown in 210 of FIG. 2, when there is a blockage between the UE and the base station (BS), inaccurate DL RSRP may be measured due to blocking of the reception signal by the blockage. As described above, DL RSRP measurement data may be used for UL coverage determination or UL carrier selection. For example, an appropriate UL carrier may be selected from among the SUL carrier and the normal UL (NUL) carrier based on a comparison between the DL SS-RSRP and a preset threshold (e.g., rsrp-ThreholdSSB-SUL).

Therefore, inaccurate DL SS-RSRP measurement may cause inaccurate UL coverage determination (or UL carrier selection). For example, as illustrated in 220 of FIG. 2, the UE may be estimated to be positioned farther from the base station than the actual location of the UE, and it may be determined that greater UL coverage is required.

The UE may estimate the pathloss based on the DL SSB (or another reference signal (e.g., CSI-RS)). In this case, e.g., as shown in FIG. 2, when there is a blockage between the UE and the base station, an inaccurate pathloss value may be estimated. Inaccurate path loss estimation may result in incorrect UL power allocation. For example, as illustrated in 230 of FIG. 2, the UE is allocated higher UL power because the UE is estimated to be positioned in a farther location than the actual location of the UE due to inaccurate pathloss estimation.

As such, as in the example of FIG. 2, when the DL band and the UL band are different, inaccurate pathloss estimation and inappropriate UL carrier selection may be made. This may be an issue that arises as channel reciprocity is not established because a DL signal using a high band is vulnerable to blockage whereas a UL signal using a low/mid band is relatively robust to blockage.

Meanwhile, inaccurate UL transmission power allocation due to inaccurate pathloss estimation may cause unnecessary power consumption of the UE and aggravate UL interference. Further, inappropriate UL carrier selection due to inaccurate DL measurement may reduce the efficiency of resource use.

Therefore, when a plurality of UL carriers are used for UL enhancement, a method for obtaining accurate pathloss and accurate UL coverage (or UL carrier) needs to be considered.

The disclosure proposes a method for obtaining UL pathloss data using a trained AI model, selecting/accessing an appropriate UL carrier from among a plurality of UL carriers using the obtained UL pathloss data, and efficiently controlling UL transmission power.

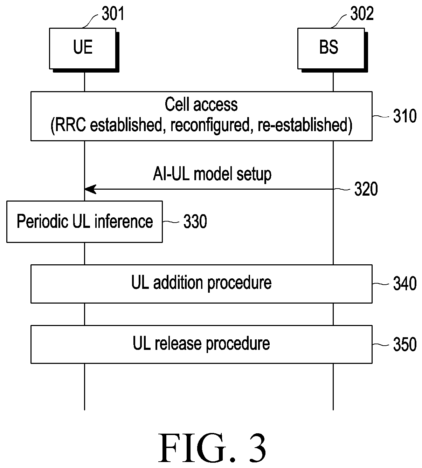

FIG. 3 illustrates a method for multiple UL carrier access according to an embodiment of the disclosure.

A method for multiple UL carrier access may be a method using AI. For example, a method for multiple UL carrier access may be a method using UL pathloss data obtained using a pre-trained AI model. As an embodiment, the AI model may be a deep learning-based model (e.g., a deep neural network (DNN), a recurrent neural network (RNN), a convolutional neural network (CNN)) and/or a machine learning-based model (e.g., support vector machine (SVM) or gradient boosting machine (GBM)).

Referring to FIG. 3, in step 310, the UE 301 and the base station 302 may perform a cell access procedure. The cell access procedure may include a radio resource control (RRC established) procedure, an RRC reconfigured procedure, and/or an RRC re-established procedure. Thus, an RRC connection may be established between the UE 301 and the base station 302.

In step 320, the base station 302 may transmit AI model setup information to the UE 301. The AI model setup information may be referred to as AI UL inference setup information.

According to an embodiment, the AI model setup information may include at least one of AI model parameters, inference interval/period parameters, UL carrier offset parameters, UL addition event parameters, UL release event parameters, or RACH indicator parameters. A description of each parameter may be as follows.

AI model: The AI model parameter may be a parameter defining an AI model. According to an embodiment, the AI model may be an AI model having the pathloss $\widehat{PL}_b(x; \theta)$ of the base UL carrier as the output. Here, the base UL carrier may be, e.g., a UL carrier having the widest UL coverage among available UL carriers, but is not limited thereto. As an embodiment, the AI model parameter may include hyperparameters for the AI model, such as the number of layers (# layers), the number of nodes (# nodes), an input/output format, and/or an activation function. The AI model parameter may be referred to as $\theta$.

Inference interval: The inference interval parameter may designate the period (UL inference period)/interval for performing UL inference using the AI model. Through UL inference using the AI model, pathloss data of the base UL carrier may be obtained periodically.

UL carrier offset: The UL carrier offset parameter may designate the offset $\triangle i$ between the pathloss $\widehat{PL}_b(x; \theta)$ of the base UL carrier and the pathloss $\widehat{PL}_i$ of another UL carrier (e.g., the UL carrier having index $i$). The UL carrier offset parameter may be set for each UL carrier.

The relationship between the pathloss $\widehat{PL}_b(x; \theta)$ and the pathloss $\widehat{PL}_i$ may be as shown in Equation 3 below.

[Equation 3]

$$\widehat{PL}_i = \widehat{PL}_b(x; \theta) + \Delta_i$$

Here, $x$ is the input (e.g., the DL RSRP measurement data (e.g., DL SS-RSRP) or UE location data (e.g., GPS data) or a combination of the DL RSRP measurement data and the UE location data) of the AI model, and $\Theta$ is the AI model parameter. Referring to Equation 3, the pathloss $\widehat{PL}_i$ of the UL carrier having index $i$ corresponds to the sum of the AI model input $x$ and the pathloss $\widehat{PL}_b(x; \theta)$ of the base UL carrier for the AI model parameter $\Theta$ and the UL carrier offset $\triangle_i$ for the UL carrier having index $i$.

UL addition event: The UL addition event parameter may include information about an event for adding a new UL carrier. The event for adding a new UL carrier may be referred to as event U1, addition event or UL addition event. The condition for event U1 (UL addition condition) may be as shown in Equation 4 below.

[Equation 4]

$$\widehat{PL}_i < Thresh_{U1}$$

Here, $Thresh_{U1}$ may be a threshold for event U1. According to Equation 4, when the pathloss $\widehat{PL}_i$ of the UL carrier (e.g., the UL carrier having index $i$) is smaller than $Thresh_{U1}$, event U1 may be determined to meet the condition (UL addition condition).

As an embodiment, the UL addition event parameter may include $Thresh_{U1}$.

UL release event: The UL release event parameter may include information about an event for releasing an existing UL carrier (event U2/release event). The event for releasing the UL carrier may be referred to as event U2, release event or UL release event. The condition for event U2 (UL release condition) may be as shown in Equation 5 below.

[Equation 5]

$$\widehat{PL}_i > Thresh_{U2}$$

Here, $Thresh_{U2}$ may be a threshold for event U2. According to Equation 5, when the pathloss $\widehat{PL}_i$ of the UL carrier (e.g., the UL carrier having index $i$) is larger than $Thresh_{U2}$, event U2 may be determined to meet the condition (UL release condition).

As an embodiment, the UL release event parameter may include $Thresh_{U2}$.

RACH indicator: The RACH indicator parameter may be an indicator indicating whether operation is performed as contention free random access (CFRA) or random access channel (RACH)-less. For example, the RACH indicator parameter may be a Boolean indicator set to one of a first value (e.g., 1) indicating operation as CFRA or a second value (e.g., 0) indicating operation as RACH-less.

According to an embodiment, the AI model setup information may be transmitted through an RRC message.

Table 1 below shows an example of an RRC message including AI model setup information.

[Table 1]

```
RRCReconfiguration-IEs ::=    SEQUENCE {
    ...
    measConfig                MeasConfig              OPTIONAL, -- Need M
    ...
    ai-ul-InferConfig         AI-UL-InferConfig       OPTIONAL, -- NEED M
}
```

Referring to Table 1, AI model setup information (e.g., ai-ul-InferConfig) may be included in an RRC message or the RRCReconfiguaration information element (IE) in the RRC message. The ai-ul-InferConfig information included in the RRC message may be an example of the above-described AI model setup information.

Table 2 below illustrates an example of parameters included in the AI model setup information (e.g., ai-ul-InferConfig).

[Table 2]

```
AI-UL-InferConfig ::=         SEQUENCE {
    ai-ul-ModelConfig         AI-UL-ModelConfig       OPTIONAL,  -- Need N
    inferIdToAddModList       InferIdToAddModList     OPTIONAL,  -- Need N
    inferIdToRemoveList       InferIdToAddModList     OPTIONAL,  -- Need N
    ulAddReqConfig            UlAddReqConfig          OPTIONAL,  -- Need N
    ulRelReqConfig            UlRelReqConfig          OPTIONAL,  -- Need N
}

AI-UL-ModelConfig ::=         SEQUENCE {
    modelId                   ModelId,
    baseUL                    ULCarrierIndex,
    inferInterval             ENUMERATED {ms40, ms80, ...}
}

InferIdToRemoveList ::=       SEQUENCE (SIZE (1..maxInferId)) OF InferId
InferIdToAddModList ::=       SEQUENCE (SIZE (1..maxInferId)) OF InferIdToAddMod

InferIdToAddMod ::=           SEQUENCE {
    inferId                   InferId,
    inferObject               ULCarrierIndex,
    inferOffset               INTEGER ()
}
```

Referring to Table 2, the AI model setup information may include AI UL model setup parameters (e.g., ai-ul-ModelConfig), inference ID addition/modification list parameters (e.g., inferIDToAddModlist), inference ID removal list parameters (e.g., inferIDRemovelist), UL addition request setup parameters (e.g., ulAddReqConfig) and/or UL release request setup parameters (e.g., ulRelReqConfig).

The AI UL model setup parameters (e.g., ai-ul-ModelConfig) may include a model ID parameter (modelId) indicating the AI model ID (ModelId), a base UL parameter (baseUL) designating the base UL carrier, and/or an infer interval parameter (inferInterval) indicating the infer interval. The base UL parameter (baseUL) may include the index of the UL carrier used as the base UL carrier.

The inference ID addition/modification list parameters (e.g., inferIDToAddModlist) may include the sequence of the inference ID addition/modification parameter (e.g., inferIDToAddMod). The inference ID addition/modification parameters (e.g., inferIDToAddMod) may include an interference ID parameter (inferID) designating the interference ID, an interference object parameter (inferObject) indicating the index of the UL carrier associated with the interference ID, and/or an interference offset parameter (inferOffset) designating the infer offset. The inference ID may be used as an index to distinguish various pieces of inference configuration information.

The inference ID removal list (e.g., inferIDRemovelist) may be a sequence of inference ID parameters (InferId) to be removed.

Table 3 below shows an example of a UL addition request configuration parameter (e.g., ulAddReqConfig) and a UL release request configuration parameter (e.g., ulRelReqConfig).

[Table 3]

```
UlAddReqConfig ::=        SEQUENCE {
    eventId                   CHOICE {
        eventU1                   SEQUENCE {
            u1-Threshold              InferredPathloss-Range,
            hysteresis                Hysteresis,
            timeToTrigger             TimeToTrigger
        },
    rachIndicator             BOOLEAN
    ....
    }
}
UlRelReqConfig ::=        SEQUENCE {
    eventId                   CHOICE {
        eventU2                   SEQUENCE {
            u2-Threshold              InferredPathloss-Range,
            hysteresis                Hysteresis,
            timeToTrigger             TimeToTrigger
        },
    ....
    }
}
```

Referring to Table 3, the UL addition request configuration parameter (e.g., ulAddReqConfig) may include parameters for the UL carrier addition event (eventU1).

The UL addition request configuration parameter (e.g., ulAddReqConfig) may include a u1-Threshold parameter, a Hysteresis parameter, and/or a timeToTrigger parameter.

The u1-Threshold parameter may designate a threshold for an estimated pathloss for triggering eventU1.

The Hysteresis parameter is a parameter used for the entering condition and leaving condition of eventU1. The Hysteresis parameter in the UL addition request configuration parameter may be referred to as a first Hysteresis parameter. The entering condition of eventU1 may be referred to as a UL addition event entering condition, and the leaving condition of eventU1 may be referred to as a UL addition event leaving condition.

The timeToTrigger (TTT) parameter may designate a time (period) that should be met for eventU1 to be triggered. The timeToTrigger (TTT) parameter in the UL addition request configuration parameter may be referred to as a second timeToTrigger (TTT) parameter.

As an embodiment, the entering condition of eventU1 (the UL addition event entering condition) may be as shown in Equation 6 below.

[Equation 6]

$$PL + Hysteresis < Threshold_1$$

Here, PL denotes the estimated pathloss (e.g., $\widehat{PL}_i$ ). Hysteresis denotes the value designated by the Hysteresis parameter (first Hysteresis parameter). Threshold$_1$ denotes the value designated by the u1-Threshold parameter.

As an embodiment, the leaving condition of eventU1 may be as shown in Equation 7 below.

[Equation 7]

$$PL - Hysteresis > Threshold_1$$

Here, PL denotes the estimated pathloss (e.g., $\widehat{PL}_i$ ). The Hysteresis parameter denotes the value designated by the Hysteresis parameter (first Hysteresis parameter). Threshold$_1$ denotes the value designated by the u1-Threshold parameter.

As an embodiment, when the entering condition of eventU1 is met, a timer set to a time (period) designated by the TTT parameter (first TTT parameter) may be started.

As an embodiment, eventU1 may be triggered when the timer set to the time (period) designated by the TTT parameter (first TTT parameter) expires after the entering condition of eventU1 is met. In other words, a UL addition procedure for the corresponding UL carrier may be initiated.

As an embodiment, if the leaving condition of eventU1 is met after the entering condition of eventU1 is met and before the timer set to the time (period) designated by the TTT parameter (the first TTT parameter) expires, eventU1 is not triggered. In this case, the timer set to the time (period) designated by the TTT parameter (first TTT parameter) may be reset.

As the event for the UL addition request, eventU1 has been used as an example, but is not limited thereto.

Further, the UL addition request configuration parameters (e.g., ulAddReqConfig) may further include an RACH indicator parameter.

The UL release request configuration parameters (e.g., ulRelReqConfig) may include parameters for the UL carrier release event (eventU2).

The UL release request configuration parameters (e.g., ulRelReqConfig) may include a u2-Threshold parameter, a Hysteresis parameter, and/or a timeToTrigger (TTT) parameter.

The u2-Threshold parameter may designate a threshold for an estimated pathloss for triggering eventU2.

The Hysteresis parameter is a parameter used for the entering condition and leaving condition of eventU2. The Hysteresis parameter in the UL release request configuration parameter may be referred to as a second Hysteresis parameter. The entering condition of eventU2 may be referred to as a UL release event entering condition, and the leaving condition of eventU2 may be referred to as a UL release event leaving condition. As an embodiment, the value of the second Hysteresis parameter for UL release may be the same as or different from the value of the first Hysteresis parameter for UL addition.

The timeToTrigger parameter may designate the time that should be met for eventU2 to be triggered. The timeToTrigger parameter in the UL release request configuration parameters may be referred to as a second timeToTrigger parameter. As an embodiment, the value of the second timeToTrigger parameter for UL release may be the same as or different from the value of the first timeToTrigger parameter for UL addition.

As an embodiment, the entering condition of eventU2 (the UL release event entering condition) may be as shown in Equation 8 below.

[Equation 8]

$$PL - Hysteresis < Threshold_2$$

Here, PL denotes the estimated pathloss (e.g., $\widehat{PL}_i$ ). Hysteresis denotes the value designated by the Hysteresis parameter (second Hysteresis parameter). Threshold denotes the value designated by the u2-Threshold parameter.

As an embodiment, the leaving condition of eventU2 may be as shown in Equation 9 below.

$$[\text{Equation 9}]$$

$$PL + Hysteresis > Threshold_2$$

Here, PL denotes the estimated pathloss (e.g., $\overline{PL}_i$). Hysteresis denotes the value designated by the Hysteresis parameter (second Hysteresis parameter). Threshold denotes the value designated by the u1-Threshold parameter.

As an embodiment, when the entering condition of eventU2 is met, a timer set to a time (period) designated by the TTT parameter (second TTT parameter) may be started.

As an embodiment, eventU2 may be triggered when the timer set to the time (period) designated by the TTT parameter (second TTT parameter) expires after the entering condition of eventU2 is met. In other words, a UL release procedure for the corresponding UL carrier may be initiated.

As an embodiment, if the leaving condition of eventU2 is met after the entering condition of eventU2 is met and before the timer set to the time (period) designated by the TTT parameter (the second TTT parameter) expires, eventU2 is not triggered. In this case, the timer set to the time (period) designated by the TTT parameter (second TTT parameter) may be reset.

As the event for the UL release request, eventU2 has been used as an example, but is not limited thereto.

Further, the UL release request configuration parameter (e.g., ulRelReqConfig) may further include an RACH indicator parameter.

Further, the RRC message for AI model setup may further include Quantity configuration information (e.g., QuantityConfig).

Table 4 below shows an example of the Quantity configuration information (e.g., QuantityConfig).

$$[\text{Table 4}]$$

```
QuantityConfig ::=          SEQUENCE {
    quantityConfigNR-List        SEQUENCE (SIZE (1..maxNrofQuantityConfig)) OF QuantityConfigNR
    ...,
    quantityConfigAI-UL          QuantityConfigAI-UL
}


QuantityConfigAI-UL ::=     SEQUENCE {
    filterCoefficientAI-UL       FilterCoefficient              DEFAULT fc4,
}
```

Referring to Table 4, the Quantity configuration information (e.g., QuantityConfig) may include a quantityConfigAI-UL parameter. The quantityConfigAI-UL parameter may be used to configure the measurement quantity and L3 filtering coefficient for AI-based inference.

As an embodiment, the quantityConfigAI-UL parameter (or Quantity configuration information) may include a filterCoefficientAI-UL parameter. The filterCoefficientAI-UL parameter may designate the L3 filtering coefficient for AI UL.

In step 330, the UE 301 may perform UL inference based on the AI model (AI-based UL inference). As an embodiment, the UE 301 may perform periodic UL inference according to the period set by the inference interval parameter, but is not limited thereto.

Through the AI-based UL inference, the UE 301 may obtain/estimate pathloss data for the base UL carrier. Further, the UE 301 may obtain pathloss data for UL carrier(s) other than the base UL carrier based on the pathloss data for the base UL carrier and the value of the UL carrier offset parameter. Here, the pathloss data may include a specific value or range of values for pathloss. The pathloss value obtained through AI-based UL inference (or estimation) has a more accurate value than the pathloss value estimated by simple DL measurement. In the disclosure, the UL pathloss data inferred/estimated based on the AI model may be denoted as AI-inferred UL pathloss data, AI-inferred pathloss data, AI-estimated pathloss data or estimated pathloss data.

As an embodiment, pathloss data may be used to determine whether the UL addition condition or the UL release condition is met. Equation 4 (or Equation 6/7) may be used, e.g., to determine whether the UL addition condition is met. To determine whether the UL release condition is met, Equation 5 (or Equation 8/9) may be used, for example.

As an embodiment, the pathloss data may be used to determine power for UL transmission (UL transmission power) using the selected UL carrier. To determine the UL transmission power based on the pathloss data, Equation 1 or Equation 2 may be used, for example. In this case, the pathloss value $\widehat{PL_i}$ of the UL carrier may be used as the value $PL_{b,f,c}$ of Equation 1 or the value $PL_{b,f,c}(q_d)$ of Equation 2.

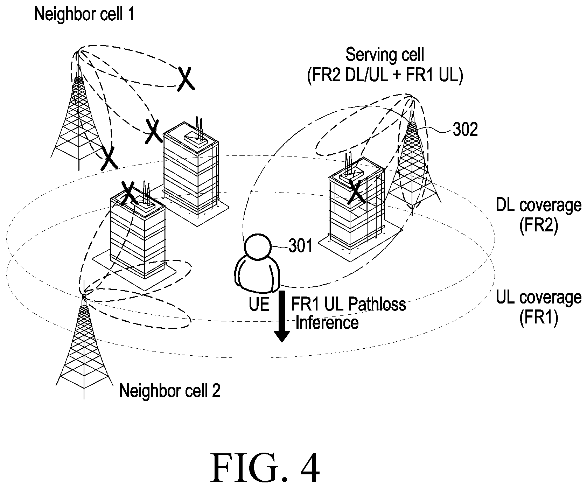

Examples of AI-based UL inference are described below with reference to FIGS. 4 to 6.

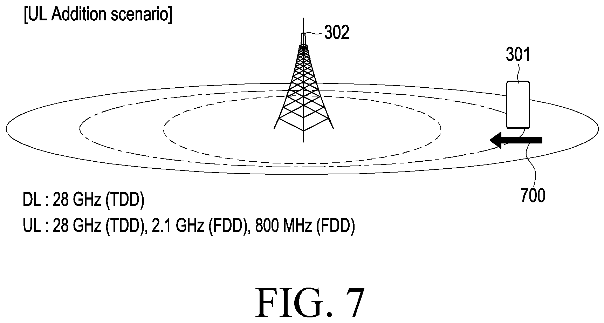

In step 340, the UE 301 may perform a UL addition procedure. The UL addition procedure of step 340 may be a conditional procedure. As an embodiment, the UE 301 may determine whether the UL addition condition is met using the pathloss data obtained based on the AI-based UL inference and, when the UL addition condition is met, perform a procedure for adding a new UL carrier. Examples of the UL carrier addition procedure are described below with reference to FIGS. 7 to 9.

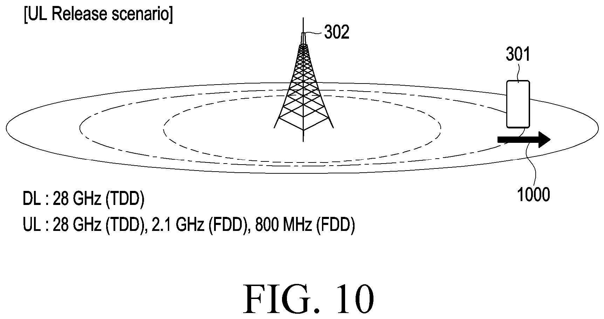

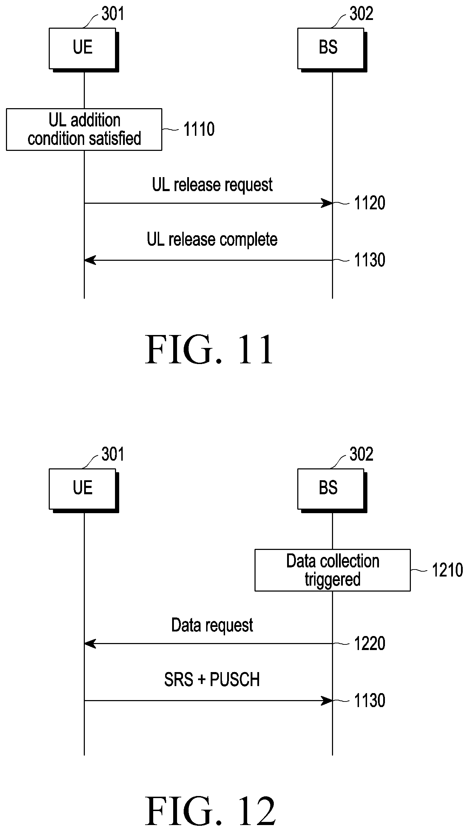

In step 350, the UE 301 may perform a UL release procedure. The UL addition procedure of step 350 may be a conditional procedure. As an embodiment, the UE 301 may determine whether the UL release condition is met using the pathloss data obtained based on the AI-based UL inference and, when the UL release condition is met, perform a procedure for releasing an existing UL carrier. Examples of the UL carrier release procedure are described below with reference to FIGS. 10 and 11.

As such, according to the method for multiple UL carrier access of the disclosure, it is possible to add/release one or more UL carriers using the exact pathloss data obtained/estimated through AI-based UL inference. In this case, a plurality of UL carriers may be configured. Thus, it is possible to support flexible UL Tx switching and select an appropriate UL carrier.

Further, according to the method for multiple UL carrier access of the disclosure, it is possible to perform accurate UL power control using the exact pathloss data obtained through AI-based UL inference. This may reduce UL interference and prevent unnecessary UE power consumption.

Meanwhile, according to embodiments, some of the operations (steps) shown in FIG. 3 may be omitted or additional operations may be further included. For example, when the UL addition condition is not met, the UL addition procedure of step 340 may not be performed. When the UL release condition is not met, the UL release procedure of step 350 may not be performed. Further, the operations (steps) may be performed in an order different from the order shown.

FIG. 4 illustrates an example scenario for AI-based UL inference according to an embodiment of the disclosure.

In the case of the embodiment of FIG. 4, the UE 301 may receive DL signals from a serving cell 302 and at least one neighbor cell (e.g., neighbor cell 1/2). The serving cell 302 may use the FR2 band for DL/UL and may use the FR1 band for UL (e.g., SUL), but is not limited thereto. As shown, some of the received DL signals may be blocked by blockage.

Referring to FIG. 4, the UE 301 may infer the pathloss for the base UL carrier (e.g., a UL carrier using the FR1 band) using the AI model. As an embodiment, the input of the AI model used for pathloss inference for the base UL carrier may include not only the DL RSRP data (e.g., DL SS-RSRP data) of the serving cell, but also the DL RSRP data (e.g., DL SS-RSRP data) of the neighbor cell(s). Accurate pathloss data may be obtained through this AI-based inference. Thus, flexible UL Tx switching and UL transmission power control may be performed.

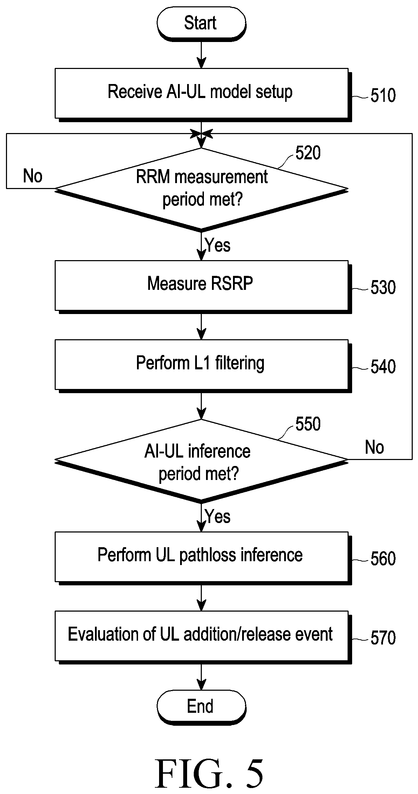

FIG. 5 illustrates a procedure for performing AI-based UL inference by a UE according to an embodiment of the disclosure.

The AI-based UL inference procedure of FIG. 5 may be an example of step 330 of FIG. 3.

Referring to FIG. 5, a procedure for performing AI-based UL inference (AI-based UL inference procedure) may include some or all of the following operations.

In operation 510, the UE may receive AI model setup information from the base station. The AI model setup information of operations 510 and 510 of FIG. 5 may be the same as the AI model setup information of operations 320 and 320 of FIG. 3.

In operation 520, the UE may determine whether a radio resource management (RRM) measurement period is met. When the RRM measurement period is met, operation 530 may be performed and, when the RRM measurement period is not met, operation 520 may be performed again.

At operation 530, the UE may measure DL RSRP. For example, the UE may measure the beam-level DL SS-RSRP based on the SSB (or the reference signal included in the SSB). And/or, the UE may measure DL RSRP based on another reference signal (e.g., CSI-RS).

In operation 540, the UE may perform filtering (e.g., L1 filtering) on DL RSRP measurement data. Operation 540 may be an optional operation.

In operation 550, the UE may determine whether the UL inference period is met. As an embodiment, the UE may determine whether the UL inference period is met based on the value of the Inference interval parameter. When the UL reasoning period is met, operation 560 may be performed and, when the UL reasoning period is not met, operation 520 may be performed again.

In operation 560, the UE may perform UL pathloss inference (AI-based UL inference) based on the DL RSRP measurement data (or filtered DL RSRP measurement data). The UE may infer (or estimate) the pathloss for the UL carrier using the pre-trained AI model. The AI model may be configured by the AI model setup information. As an embodiment, the UE may obtain pathloss data for the base UL carrier using the pre-trained AI model based on the DL RSRP measurement data (or filtered DL RSRP measurement data) and obtain pathloss data for the base UL carrier and pathloss data for other UL carriers using the value of the UL carrier offset parameter. In this case, the DL RSRP measurement data (or filtered DL RSRP measurement data) may be used as an input of the AI model.

In operation 570, the UE may perform evaluation on the UL addition event and/or UL release event. The UE may determine whether the UL addition event meets a preset condition (UL addition condition) and/or whether the UL release event meets a preset condition (UL release condition) based on the inferred pathloss data. Thus, the UL addition event and/or the UL release event is triggered, so that a UL addition procedure and a UL release procedure may be performed.

Meanwhile, according to embodiments, some of the operations shown in FIG. 5 may be omitted or additional operations may be further included. For example, operation 540 may be omitted as an optional operation. For example, operation 510 may be a separate operation performed before the AI-based UL inference procedure, and operation 520 may be a separate operation performed after the AI-based UL inference procedure. Further, the operations may be performed in an order different from the order shown.

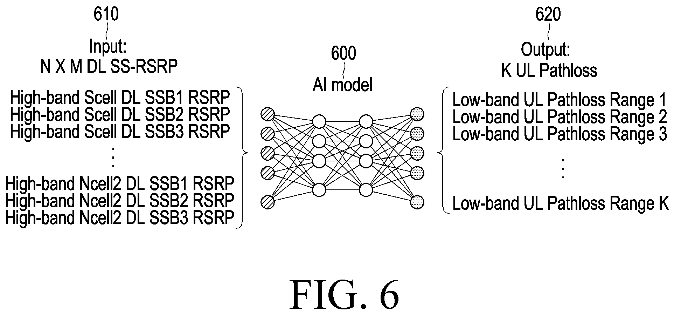

FIG. 6 illustrates an example of an AI model for AI-based UL inference according to an embodiment of the disclosure.

The AI model of FIG. 6 shows an example of an AI model using DL RSRP measurement data (e.g., beam level SS-RSRP measurement data) as an input. Referring to FIG. 6, the AI model 600 may receive N*M-sized DL SS-RSRP measurement data as an input 610. For example, in the case of having the arrangement structure of FIG. 4, the DL SS-RSRP data may include, but is not limited to, DL SS-RSRP measurement values for SSB1 to SSBn of the serving cell, DL SS-RSRP measurement values for SSB1 to SSBm of neighbor cell 1 (NCell1), and/or DL SS-RSRP measurement values for SSB1 to SSB1 of neighbor cell 2 (NCell2).

The AI model 600 may generate probability values for K low-band UL pathloss ranges for the base UL carrier as an output 620.

As an embodiment, the UE may determine that the low-band UL pathloss range having the highest probability value among the probability values included in the output 620 is the pathloss range of the base UL carrier corresponding to the corresponding input. Further, the UE may determine a pathloss range for a UL carrier other than the base UL carrier, using the UL carrier offset parameter.

As described above, in the example of FIG. 6, for convenience of description, DL SS-RSRP measurement data is used as an input of the AI model, but is not limited thereto. For example, DL RSRP measurement data measured based on other reference signals (e.g., CSI-RS) may also be used as an input of the AI model. For example, location information about the UE (e.g., GPS-based location data (GPS data)) may be used as an input of the AI model. For example, a combination of the DL RSRP data (e.g., DL SS-RSRP or DL RSRP data based on another reference signal) and location information about the UE may be used as an input of the AI model.

Further, in FIG. 6, it has been described as an example that pathloss ranges are used as output labels of the AI model, but it is not limited thereto. For example, specific pathloss values may be used as output labels.

FIG. 7 illustrates an example scenario for UL carrier addition according to an embodiment of the disclosure.

In the case of the embodiment of FIG. 7, for convenience of description, it is assumed that three UL carriers are used. For example, as shown, a UL carrier (UL carrier 1) using a 28 GHz band, a UL carrier (UL carrier 2) using a 2.1 GHz band, and a UL carrier (UL carrier 3) using an 800 MHz band may be used. Among them, one UL carrier may be used as a base UL carrier. For example, UL carrier 3 having the widest coverage may be set as the base UL carrier.

As shown in FIG. 7, when the UE 301 moves closer to the base station 302, an event for adding a UL carrier (event U1) may meet a preset condition (UL addition condition). For example, when the UE 301, located outside the UL coverage of UL carrier 2, moves within the UL coverage of UL carrier 2, an event for adding UL carrier 2 may meet a preset condition. Equation 4 (or Equation 6/7) may be used, e.g., to determine whether the UL addition condition is met. In this case, the value of pathloss data for UL carrier 2 may be obtained by adding the value of the UL carrier offset for UL carrier 2 set by the UL carrier offset parameter to the pathloss data value for UL carrier 3 which is the base UL carrier obtained using the AI model.

When the UL addition condition is met (i.e., when the UL addition event (event U1) is triggered), the UE 301 and the base station 302 may perform a procedure for adding a new UL carrier.

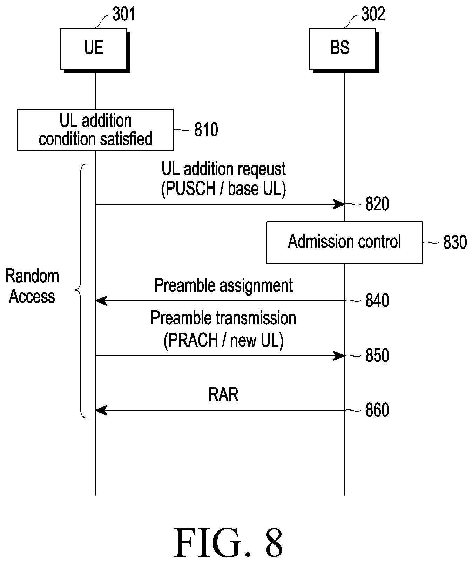

FIG. 8 illustrates an example of a procedure for UL carrier addition according to an embodiment of the disclosure.

The UL carrier addition procedure of FIG. 8 may be an example of step 340 of FIG. 3. The UL carrier addition procedure of FIG. 8 may be a UL carrier addition procedure operating as CFRA. In the embodiment of FIG. 8, CFRA may be performed after transmission of a UL addition request message using the base UL carrier of the UE.

Referring to FIG. 8, in operation 810, the UE 301 may identify that the UL addition condition is met. For example, the UE 301 may identify that the UL addition condition of Equation 4 is met. Or, when the UL addition event entering condition of Equation 6 is met, and a preset period (e.g., the period set by the timeToTrigger parameter) elapses, the UE 301 may identify that the UL addition condition is met.

In operation 820, the UE 301 may transmit a UL addition request message to the base station 302. According to an embodiment, the UE 301 may transmit a UL addition request message using the base UL carrier. For example, the UE 301 may transmit a UL addition request message through the PUSCH using the base UL carrier.

According to an embodiment, the UL addition request message may include UL carrier index information about an addition event (event U1), AI-based UL inferred (AI-inferred) UL pathloss information, and/or PUSCH transmission power information.

Here, the UL carrier index information about the addition event may include the index of a UL carrier to be added when the UL addition condition is met.

The AI-inferred UL pathloss information may include an AI-inferred/estimated UL pathloss value (e.g., a UL pathloss range value) for the base UL carrier (or a UL carrier to be added). When the AI-inferred/estimated UL pathloss value for the base UL carrier is transferred to the base station 302, the base station 302 may obtain/calculate the AI-inferred/estimated UL pathloss value for the corresponding UL carrier using the UL carrier offset parameter value for the corresponding UL carrier.

The PUSCH transmission power information may include the transmission power value of the PUSCH through which the UL addition request is transmitted.

In operation 830, the base station 302 may perform admission control on the UL carrier to be added. Through admission control, the base station 302 may determine whether the UL carrier to be added may receive the corresponding UE.

In operation 840, the base station 302 may transmit a preamble assignment message. According to an embodiment, the base station 302 may transmit a preamble assignment message through the PDSCH. The preamble assignment message is an RRC message and may serve as a UL addition command for the UL addition request message.

According to an embodiment, the preamble assignment message may include information for assigning a preamble to be transmitted on a new UL carrier.

The preamble assignment message may optionally further include transmit power control (TPC) information for MSG1 (MSG1_PRACH) for random access. The TPC information for MSG1 may include a power correction value obtained based on a comparison between PUSCH-related power information and AI-inferred UL pathloss information in the UL addition request message. The PUSCH-related power information may be a value corresponding to a difference between the PUSCH reception power measured by the base station 302 (e.g., the reception power of the PUSCH including the UL addition request message) and the PUSCH transmission power in the UL addition request message.

The preamble assignment message may optionally further include RACH configuration information about the new UL carrier. In this case, system information block 1 (SIB1) broadcasted by the base station may include only RACH configuration information about the base UL carrier. RACH configuration information about the remaining UL carriers other than the base UL carrier may be included in the preamble assignment message for the corresponding UL carrier and transmitted. Thus, the overhead of SIB1 may be reduced. Instead, SIB1 may include RACH configuration information about all the UL carriers. In this case, the preamble assignment message does not include RACH configuration information about the new UL carrier. As an embodiment, the RACH configuration information may include, e.g., the number of SSBs per RACH occasion for the UL carrier and the number of preambles per SSB.

In operation 840, the UE 301 may transmit a preamble (MSG1) to the base station 302. According to an embodiment, the UE 301 may transmit a preamble using a new UL carrier. For example, the UE 301 may transmit a preamble through PRACH using the new UL carrier.

In operation 850, the base station 302 may transmit a random access response (RAR) (MSG2) to the UE 301. According to an embodiment, the base station 302 may transmit the RAR through the PDSCH.

According to an embodiment, the RAR may include a timing advance (TA) command and/or a training data collection indicator of the new UL carrier. The training data collection indicator may also be referred to as a data request indicator. As an embodiment, the training data collection indicator or data request indicator may be set to a first value (e.g., 1) indicating a request (data request) for training data (sample) or a second value (e.g., 0) not indicating a request (data request) for training data (sample).

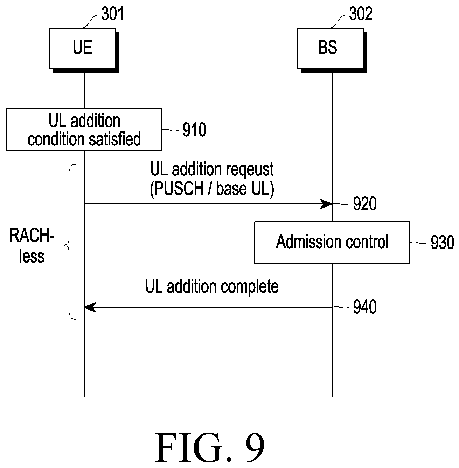

FIG. 9 illustrates an example of a procedure for UL carrier addition according to an embodiment of the disclosure.

The UL carrier addition procedure of FIG. 9 may be an example of step 340 of FIG. 3. The UL carrier addition procedure of FIG. 9 may be a UL carrier addition procedure operating as RACH-less.

Referring to FIG. 9, in operation 910, the UE 301 may identify that the UL addition condition is met. For example, the UE 301 may identify that the UL addition condition of Equation 4 is met. Or, when the UL addition event entering condition of Equation 6 is met, and a preset period (e.g., the period set by the timeToTrigger parameter) elapses, the UE 301 may identify that the UL addition condition is met.

In operation 920, the UE 301 may transmit a UL addition request message to the base station 302. According to an embodiment, the UE 301 may transmit a UL addition request message using the base UL carrier. For example, the UE 301 may transmit a UL addition request message through the PUSCH using the base UL carrier.

For example, the UE 301 may transmit a UL addition request message for UL addition to the base station 302 through an RRC message. According to an embodiment, the UL addition request message may include UL carrier index information about an addition event (event U1), AI-based UL inferred (AI-inferred) UL pathloss information, and/or PUSCH transmission power information. For a description of each piece of information, reference may be made to the description of FIG. 8.

As another example, the UE 301 may transmit a UL carrier activation request for UL carrier activation to the base station 302 through a MAC control element (CE). For example, when a previously configured UL carrier between the UE 301 and the base station 302 meets an addition event (event U1), the UE 302 may transmit a UL carrier activation request to the base station 302 using the MAC CE instead of an RRC message.

In operation 930, the base station 302 may perform admission control on the UL carrier to be added. Through admission control, the base station 302 may determine whether the UL carrier to be added may receive the corresponding UE.

In operation 940, the base station 302 may transmit a message indicating that the addition of the UL carrier is complete (UL addition complete message) to the UE 301.

FIG. 10 illustrates an example scenario for UL carrier release according to an embodiment of the disclosure.

In the case of the embodiment of FIG. 10, for convenience of description, it is assumed that three UL carriers are used. For example, as shown, a UL carrier (UL carrier 1) using a 28 GHz band, a UL carrier (UL carrier 2) using a 2.1 GHz band, and a UL carrier (UL carrier 3) using an 800 MHz band may be used. Among them, one UL carrier may be used as a base UL carrier. For example, UL carrier 3 having the widest coverage may be set as the base UL carrier.

As shown in FIG. 10, when the UE 301 moves away from the base station 302, an event for releasing a UL carrier (event U2) may meet a preset condition (UL release condition). For example, when the UE 301 located within the UL coverage of UL carrier 2 moves out of the UL coverage of UL carrier 2, the event for releasing UL carrier 2 may meet the preset condition. To determine whether the UL release condition is met, Equation 5 (or Equation 8/9) may be used, for example. In this case, the value of pathloss data for UL carrier 2 may be obtained by adding the UL carrier offset for UL carrier 2 set by the UL carrier offset parameter to the pathloss data value for UL carrier 3 which is the base UL carrier obtained using the AI model.

When the UL release condition is met (i.e., when the UL release event (event U2) is triggered), the UE 301 and the base station 302 may perform a procedure for releasing an existing UL carrier.

FIG. 11 illustrates an example of a procedure for UL carrier release according to an embodiment of the disclosure.

The UL carrier release procedure of FIG. 11 may be an example of step 350 of FIG. 3.

Referring to FIG. 11, in operation 1110, the UE 301 may identify that the UL release condition is met. For example, the UE 301 may identify that the UL release condition of Equation 5 is met. Or, when the UL release event entering condition of Equation 8 is met, and a preset period (e.g., the period set by the timeToTrigger parameter) elapses, the UE 301 may identify that the UL release condition is met.

In operation 1120, the UE 301 may transmit a UL release request message to the base station 302. According to an embodiment, the UE 301 may transmit a UL release request message using the base UL carrier. For example, the UE 301 may transmit a UL release request message through the PUSCH using the base UL carrier.

In operation 1130, the base station 302 may transmit a message indicating that the release of the UL carrier is complete (UL addition complete message) to the UE 301.

FIG. 12 illustrates an example of a data collection procedure for training an AI model according to an embodiment of the disclosure.

The embodiment of FIG. 12 shows an example of periodic (or random) training data collection. The training data collection procedure of FIG. 12 may be suitable for collecting data for initial AI model training. The initial training of the AI model may be performed by the base station or a server connected to the base station, but is not limited thereto.

Referring to FIG. 12, in operation 1210, the base station 302 may identify that data collection (or data collection event) is triggered. According to an embodiment, the base station 302 may identify that data collection (or data collection event) is triggered when a preset condition (e.g., periodic condition) is met.

In operation 1220, the base station 302 may transmit a data request message to the UE 301. According to an embodiment, the base station 302 may select a UE to request for data when it is identified that data collection (or data collection event) is triggered. As an embodiment, the base station 302 may select all the UEs or some randomly selected UEs as UEs to request for data.

In operation 1230, the UE 301 may transmit a reference signal and a PUSCH to the base station 302. The reference signal may be a sounding reference signal (SRS), but is not limited thereto. Hereinafter, for convenience of description, it is assumed that the reference signal is the SRS.

As an embodiment, the PUSCH may include data (e.g., DL RSRP measurement data (e.g., DL SS-RSRP measurement data) or UE location data (e.g., GPS data)) to be used as an input (X data) of an AI model to be trained.

As an embodiment, the SRS may be used by the base station 302 to estimate UL pathloss. The UL pathloss estimated based on the SRS may be used as an output (Y label/actual value) for training the AI model. For example, the AI model may be trained to reduce the difference (error) between the UL pathloss (actual value) estimated based on the SRS and the AI-based UL inferred (AI-inferred) UL pathloss (inferred value) based on the input (X data). The configuration information for the so trained AI model may be transmitted to the UE 301 through the above-described AI model setup information (e.g., the AI model setup information of 320 in FIG. 3).

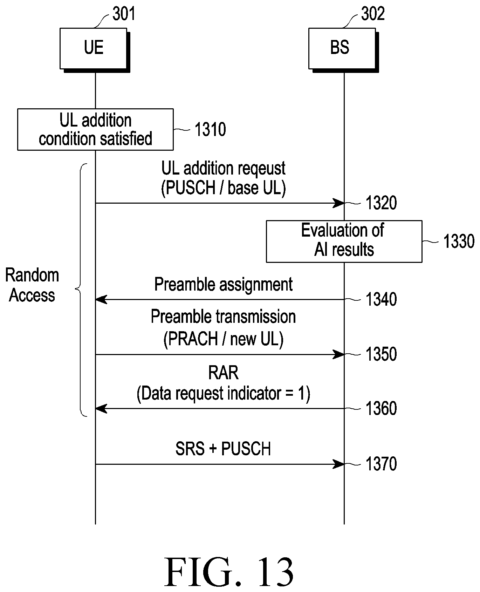

FIG. 13 illustrates another example of a data collection procedure for training an AI model according to an embodiment of the disclosure.

The embodiment of FIG. 13 shows an example of threshold-based training data collection. The training data collection procedure of FIG. 13 may be suitable for collecting additional data for fine-tuning of the AI model that is running. The fine tuning of the AI model may be performed by the base station or a server connected to the base station, but is not limited thereto.

Referring to FIG. 13, in operation 1310, the UE 301 may identify that the UL addition condition is met. For example, the UE 301 may identify that the UL addition condition of Equation 4 is met. Or, when the UL addition event entering condition of Equation 6 is met, and a preset period (e.g., the period set by the timeToTrigger parameter) elapses, the UE 301 may identify that the UL addition condition is met.

In operation 1320, the UE 301 may transmit a UL addition request message to the base station 302. Operation 1320 and the UL addition request message of operation 1320 of FIG. 13 may be identical to operation 820 and the UL addition request message of operation 820 of FIG. 8.

In operation 1330, the base station 302 may perform evaluation of AI results. For example, the base station 302 may determine whether the result of comparison between PUSCH-related power information and AI-inferred UL pathloss information (e.g., pathloss range value) in the UL addition request message is equal to or larger than a threshold. Here, the PUSCH-related power information may be a value corresponding to a difference between the PUSCH reception power measured by the base station 302 (e.g., the reception power of the PUSCH including the UL addition request message) and the PUSCH transmission power in the UL addition request message. When the result of comparison between the PUSCH-related power value and the AI-inferred UL pathloss value in the UL addition request message is larger than or equal to the threshold, the base station 302 may set the value of the training data collection indicator (data request indicator) in the RAR to the first value (e.g., 1) to indicate a request for training data. A description of the training data collection indicator (data request indicator) may refer to FIG. 8.

In operation 1340, the base station 302 may transmit a preamble assignment message. Operation 1340 and the preamble assignment message of operation 1340 of FIG. 13 may be identical to operation 840 and the preamble assignment message of operation 840 of FIG. 8.

In operation 1350, the UE 301 may transmit a preamble (MSG1) to the base station 302. Operation 1350 and the preamble of operation 1350 of FIG. 13 may be identical to operation 840 and the preamble of operation 840 of FIG. 8.

In operation 1360, the base station 302 may transmit an RAR (MSG2) to the UE 301. As described above, the RAR may include a training data collection indicator (data request indicator). The value of the training data collection indicator (data request indicator) may be set to the first value (e.g., 1) indicating a data request.

In operation 1360, the UE 301 may transmit a reference signal (e.g., SRS) and a PUSCH to the base station 302. For example, when the value of the training data collection indicator (data request indicator) in the RAR is set to the first value (e.g., 1) indicating a data request, the UE 301 may transmit the SRS and PUSCH to the base station 302.

As an embodiment, the PUSCH may include data (e.g., DL RSRP measurement data (e.g., DL SS-RSRP measurement data) or UE location data (e.g., GPS data)) to be used as an input (X data) of an AI model to be trained.

As an embodiment, the SRS may be used by the base station 302 to estimate UL pathloss. The UL pathloss estimated based on the SRS may be used as an output (Y label/actual value) for training the AI model. For example, the AI model may be trained to reduce the difference (error) between the UL pathloss (actual value) estimated based on the SRS and the AI-based UL inferred (AI-inferred) UL pathloss (inferred value) based on the input (X data). The configuration information for the so trained AI model may be transmitted to the UE 301 through the above-described AI model setup information (e.g., the AI model setup information of 320 in FIG. 3).

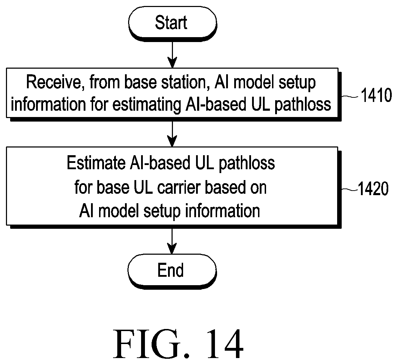

FIG. 14 is a flowchart illustrating a method by a UE according to an embodiment of the disclosure.

Referring to FIG. 14, the UE may receive AI model setup information (e.g., the AI model setup information of 320 in FIG. 3) for estimating AI-based UL pathloss from the base station (1410).

The UE may estimate AI-based UL pathloss for the base UL carrier based on the AI model setup information (1420).

As an embodiment, the AI model setup information may include at least one of information on an AI model used for estimating the AI-based UL pathloss, period information for estimating the AI-based UL pathloss, offset information designating an offset between AI-based UL pathloss for the base UL carrier and AI-based UL pathloss for the corresponding UL carrier, information about a UL carrier addition event, or information about a UL carrier release event.

As an embodiment, the AI model setup information may further include indicator information indicating whether UL carrier addition is operated as contention free random access (CFRA) or random access channel (RACH)-less.

As an embodiment, the AI model setup information may be transmitted through an RRC message.

As an embodiment, the UE may determine whether a condition for adding a new UL carrier is met based on the AI-based UL pathloss and, when the condition for adding a new UL carrier is met, add the new UL carrier.

As an embodiment, the UE may transmit a UL carrier addition request message for the new UL carrier to the base station, receive a preamble assignment message for assigning a preamble to be transmitted to the new UL carrier from the base station, transmit the preamble, and receive a random access response corresponding to the preamble.

As an embodiment, the UL carrier addition request message may include UL carrier index information about a new UL carrier to be added, information about the AI-based UL pathloss, and transmission power information about the PUSCH where the UL carrier addition request message is transmitted.

As an embodiment, the random access response may include indication information indicating whether to request training data to be used for training an AI model used for estimation of the AI-based UL pathloss. When the indication information is set to a value indicating to request the training data, the UE may transmit a sounding reference signal (SRS) and a PUSCH to the base station.

As an embodiment, the UE may determine whether a condition for releasing an existing UL carrier is met based on the AI-based UL pathloss.

As an embodiment, the AI model used for estimation of the AI-based UL pathloss may use the DL reference signal received power (RSRP) measured based on the downlink (DL) signal received from the serving cell and at least one neighbor cell or location data of the UE, as input data.

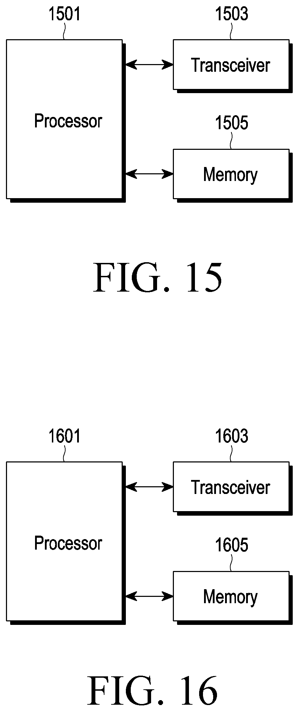

FIG. 15 is a view illustrating an example of a configuration of a UE in a wireless communication system according to an embodiment of the disclosure.

In FIG. 15, a UE may include a processor 1501, a transceiver 1503, and a memory 1505. The processor 1501, transceiver 1503, and memory 1505 of the UE of FIG. 7 may be operated according to the method(s) described above in connection with FIGS. 1 to 14. However, the components of the UE are not limited thereto. For example, the UE may include more or fewer components than the above-described components. The processor 1501, the transceiver 1503, and the memory 1505 may be implemented in the form of at least one chip.

The transceiver 1503 collectively refers to a receiver and a transmitter and may transmit and receive signals to/from a UE or another network entity. The transmitted/received signals may include at least one of control information and data. To that end, the transceiver 1503 may include an RF transmitter for frequency-up converting and amplifying signals transmitted and an RF receiver for low-noise amplifying signals received and frequency-down converting the frequency of the received signals. This is merely an embodiment of the transceiver 510, and the components of the transceiver 1503 are not limited to the RF transmitter and the RF receiver. Further, the transceiver 1503 may receive signals through a communication scheme defined in the 3GPP standard, output the signals to the processor 1501, and transmit the signals output from the processor 1501. Further, the transceiver 1503 may receive the signal and output it to the processor 1501 and transmit the signal output from the processor 1501 to another network entity through the network.

The memory 1505 may store programs and data necessary for the operation of the UE according to at least one of the embodiments of FIGS. 1 to 14. The memory 1505 may store control information and/or data that is included in the signal obtained by the UE. The memory 1505 may include a storage medium, such as ROM, RAM, hard disk, CD-ROM, and DVD, or a combination of storage media.

The processor 1501 may control a series of processes so that the UE may operate according to at least one of the embodiments of FIGS. 1 to 14. The processor 1501 may include at least one processor.

FIG. 16 is a view illustrating an example of a configuration of a base station in a wireless communication system according to an embodiment of the disclosure.

In FIG. 16, a base station may include a processor 1601, a transceiver 1603, and a memory 1605. The processor 1601, transceiver 1603, and memory 1605 of the UE of FIG. 7 may be operated according to the method(s) described above in connection with FIGS. 1 to 14. However, the components of the UE are not limited thereto. For example, the UE may include more or fewer components than the above-described components. The processor 1601, the transceiver 1603, and the memory 1605 may be implemented in the form of at least one chip.

The transceiver 1603 collectively refers to a receiver and a transmitter and may transmit and receive signals to/from a UE or another network entity. The transmitted/received signals may include at least one of control information and data. To that end, the transceiver 1603 may include an RF transmitter for frequency-up converting and amplifying signals transmitted and an RF receiver for low-noise amplifying signals received and frequency-down converting the frequency of the received signals. This is merely an embodiment of the transceiver 1603, and the components of the transceiver 1603 are not limited to the RF transmitter and the RF receiver. Further, the transceiver 1603 may receive signals through a communication scheme defined in the 3GPP standard, output the signals to the processor 1601, and transmit the signals output from the processor 1601. Further, the transceiver 1603 may receive the signal and output it to the processor 1601 and transmit the signal output from the processor 1601 to another network entity through the network.

The memory 1605 may store programs and data necessary for the operation of the base station according to at least one of the embodiments of FIGS. 1 to 14. The memory 1605 may store control information and/or data that is included in the signal obtained by the UE. The memory 1505 may include a storage medium, such as ROM, RAM, hard disk, CD-ROM, and DVD, or a combination of storage media.

The processor 1601 may control a series of processes so that the base station may operate according to at least one of the embodiments of FIGS. 1 to 14. The processor 1601 may include at least one processor.

In the above-described specific embodiments, the components included in the disclosure are represented in singular or plural forms depending on specific embodiments proposed. However, the singular or plural forms are selected to be adequate for contexts suggested for ease of description, and the disclosure is not limited to singular or plural components. As used herein, the singular forms "a," "an," and "the" are intended to include the plural forms as well, unless the context clearly indicates otherwise.

Although specific embodiments of the present disclosure have been described above, various changes may be made thereto without departing from the scope of the present disclosure. Thus, the scope of the disclosure should not be limited to the above-described embodiments, and should rather be defined by the following claims and equivalents thereof.

**Claims**

1. A method by a user equipment (UE) in a wireless communication system, the method comprising:

    receiving, from a base station, artificial intelligence (AI) model setup information for estimating AI-based uplink (UL) pathloss; and
    estimating the AI-based UL pathloss for a base UL carrier based on the AI model setup information.

2. The method of claim 1, wherein the AI model setup information includes at least one of information about an AI model used to estimate the AI-based UL pathloss, period information for estimating the AI-based UL pathloss, offset information specifying an offset between an AI-based UL pathloss for the base UL carrier and an AI-based UL pathloss for a corresponding UL carrier, information about a UL carrier addition event, or information about a UL carrier release event.

3. The method of claim 2, wherein the AI model setup information further includes indicator information indicating whether UL carrier addition is operated as contention free random access (CFRA) or random access channel (RACH)-less.

4. The method of claim 3, wherein the AI model setup information is transmitted through a radio resource control (RRC) message.

5. The method of claim 1, further comprising:

    determining whether a condition for adding a new UL carrier is met based on the AI-based UL pathloss; and
    in case that the condition for adding the new UL carrier is met, adding the new UL carrier.

6. The method of claim 5, wherein adding the new UL carrier includes:

    transmitting a UL carrier addition request message for the new UL carrier to the base station;
    receiving a preamble assignment message for assigning a preamble to be transmitted to the new UL carrier from the base station;
    transmitting the preamble; and
    receiving a random access response corresponding to the preamble.

7. The method of claim 6, wherein the UL carrier addition request message includes UL carrier index information about a new UL carrier to be added, information about the AI-based UL pathloss, and transmission power information about a physical uplink shared channel (PUSCH) where the UL carrier addition request message is transmitted.

8. The method of claim 6, wherein the random access response includes indication information indicating whether to request training data to be used for training an AI model used to estimate the AI-based UL pathloss, and wherein the method further comprises, in case that the indication information is set to a value indicating to request the training data, transmitting a sounding reference signal (SRS) and a PUSCH to the base station.

9. The method of claim 1, further comprising determining whether a condition for releasing an existing UL carrier is met based on the AI-based UL pathloss.

**10.** The method of claim 1, wherein an AI model used to estimate the AI-based UL pathloss uses downlink (DL) reference signal received power (RSRP) measurement data measured based on a DL signal received from a serving cell and at least one neighbor cell or location data of the UE, as input data.

**11.** A UE in a wireless communication system, comprising:

a memory; and
a processor connected to the memory, the processor configured to:

receive, from a base station, artificial intelligence (AI) model setup information for estimating AI-based uplink (UL) pathloss; and
estimate the AI-based UL pathloss for a base UL carrier based on the AI model setup information.

**12.** The UE of claim 11, wherein the AI model setup information includes at least one of
information about an AI model used to estimate the AI-based UL pathloss, period information for estimating the AI-based UL pathloss, offset information specifying an offset between an AI-based UL pathloss for the base UL carrier and an AI-based UL pathloss for a corresponding UL carrier, information about a UL carrier addition event, or information about a UL carrier release event.

**13.** The UE of claim 12, wherein the AI model setup information further includes indicator information indicating whether UL carrier addition is operated as contention free random access (CFRA) or random access channel (RACH)-less.

**14.** The UE of claim 13, wherein the AI model setup information is transmitted through a radio resource control (RRC) message.

**15.** The UE of claim 11, wherein the processor is configured to:

determine whether a condition for adding a new UL carrier is met based on the AI-based UL pathloss; and
in case that the condition for adding the new UL carrier is met, add the new UL carrier.

FIG. 1

BS

230

210

Actual UE location

220

Estimated UE location

DL : high band (ex. 28 GHz)
UL : low/mid band (ex. 800 MHz)

FIG. 2

FIG. 3

Neighbor cell 1

Serving cell
(FR2 DL/UL + FR1 UL)

302

DL coverage
(FR2)

301

UE | FR1 UL Pathloss
Inference

UL coverage
(FR1)

Neighbor cell 2

FIG. 4

Start

Receive AI-UL model setup — 510

RRM measurement period met? — 520

No

Yes

Measure RSRP — 530

Perform L1 filtering — 540

AI-UL inference period met? — 550

No

Yes

Perform UL pathloss inference — 560

Evaluation of UL addition/release event — 570

End

# FIG. 5

610

Input:
N X M DL SS-RSRP

High-band Scell DL SSB1 RSRP
High-band Scell DL SSB2 RSRP
High-band Scell DL SSB3 RSRP
⋮
High-band Ncell2 DL SSB1 RSRP
High-band Ncell2 DL SSB2 RSRP
High-band Ncell2 DL SSB3 RSRP

600

AI model

620

Output:
K UL Pathloss

Low-band UL Pathloss Range 1
Low-band UL Pathloss Range 2
Low-band UL Pathloss Range 3
⋮
Low-band UL Pathloss Range K

# FIG. 6

[UL Addition scenario]

DL : 28 GHz (TDD)
UL : 28 GHz (TDD), 2.1 GHz (FDD), 800 MHz (FDD)

# FIG. 7

FIG. 8

FIG. 9

[UL Release scenario]

302

301

1000

DL : 28 GHz (TDD)

UL : 28 GHz (TDD), 2.1 GHz (FDD), 800 MHz (FDD)

# FIG. 10

FIG. 11

FIG. 12

FIG. 13

Start

Receive, from base station, AI model setup
information for estimating AI-based UL pathloss ~1410

Estimate AI-based UL pathloss
for base UL carrier based on
AI model setup information ~1420

End

# FIG. 14

1501       1503

Processor

Transceiver

1505

Memory

# FIG. 15

1601       1603

Processor

Transceiver

1605

Memory

# FIG. 16

## INTERNATIONAL SEARCH REPORT

International application No.

**PCT/KR2022/020007**

### A. CLASSIFICATION OF SUBJECT MATTER

**H04W 72/21**(2023.01)i; **H04W 24/08**(2009.01)i; **G06N 20/00**(2019.01)i; **H04L 5/00**(2006.01)i; **H04W 74/08**(2009.01)i; **H04W 74/00**(2009.01)i; **H04W 72/23**(2023.01)i; **H04B 17/309**(2015.01)i

According to International Patent Classification (IPC) or to both national classification and IPC

### B. FIELDS SEARCHED

Minimum documentation searched (classification system followed by classification symbols)

H04W 72/21(2023.01); G06N 3/04(2006.01); G06N 3/08(2006.01); H04B 17/318(2015.01); H04B 17/391(2015.01); H04W 16/00(2009.01); H04W 16/18(2009.01); H04W 64/00(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: AI model configuration, UL path loss, base UL carrier

### C. DOCUMENTS CONSIDERED TO BE RELEVANT

| Category* | Citation of document, with indication, where appropriate, of the relevant passages | Relevant to claim No. |
|---|---|---|
| Y | EP 3687210 A1 (HUAWEI TECHNOLOGIES CO., LTD.) 29 July 2020 (2020-07-29)<br>See paragraphs [0025]-[0059]; claim 1; and figures 1-3d. | 1-2,10-12 |
| A | | 3-9,13-15 |
| Y | QUALCOMM INCORPORATED. Discussion on AI/ML methods. R2-2212659, 3GPP TSG-RAN WG2 Meeting #120. 04 November 2022.<br>See sections 2-2.4.2. | 1-2,10-12 |
| A | US 2021-0195552 A1 (JUNIPER NETWORKS, INC.) 24 June 2021 (2021-06-24)<br>See paragraphs [0060]-[0080]; and figures 9-10D. | 1-15 |
| A | KR 10-2020-0087326 A (AGENCY FOR DEFENSE DEVELOPMENT) 21 July 2020 (2020-07-21)<br>See paragraphs [0036]-[0047]; and figure 1. | 1-15 |

☑ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **21 August 2023** | **22 August 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

International application No.

**PCT/KR2022/020007**

### C. DOCUMENTS CONSIDERED TO BE RELEVANT

| Category* | Citation of document, with indication, where appropriate, of the relevant passages | Relevant to claim No. |
|---|---|---|
| A | KR 10-2020-0082460 A (KWANGWOON UNIVERSITY INDUSTRY-ACADEMIC COLLABORATION FOUNDATION) 08 July 2020 (2020-07-08) See paragraphs [0032]-[0048]; and figures 5-6. | 1-15 |

Form PCT/ISA/210 (second sheet) (July 2022)

**INTERNATIONAL SEARCH REPORT**
**Information on patent family members**

International application No.

**PCT/KR2022/020007**

| Patent document cited in search report | | | Publication date (day/month/year) | Patent family member(s) | | | Publication date (day/month/year) |
|---|---|---|---|---|---|---|---|
| EP | 3687210 | A1 | 29 July 2020 | CN | 109874146 | A | 11 June 2019 |
| | | | | CN | 109874146 | B | 25 December 2020 |
| | | | | EP | 3687210 | A4 | 04 November 2020 |
| | | | | WO | 2019-109780 | A1 | 13 June 2019 |
| US | 2021-0195552 | A1 | 24 June 2021 | CN | 112437884 | A | 02 March 2021 |
| | | | | EP | 3824309 | A1 | 26 May 2021 |
| | | | | US | 10764858 | B2 | 01 September 2020 |
| | | | | US | 10986606 | B2 | 20 April 2021 |
| | | | | US | 2020-0029295 | A1 | 23 January 2020 |
| | | | | US | 2020-0337017 | A1 | 22 October 2020 |
| | | | | WO | 2020-018678 | A1 | 23 January 2020 |
| KR | 10-2020-0087326 | A | 21 July 2020 | KR | 10-2211847 | B1 | 03 February 2021 |
| KR | 10-2020-0082460 | A | 08 July 2020 | KR | 10-2281294 | B1 | 23 July 2021 |